# EUROPEAN PATENT APPLICATION

(11) **EP 2 808 858 A1**
(43) Date of publication of application: **03.12.2014**
(21) Application number: 13170115.3
(22) Date of filing: 31.05.2013
(51) Int. Cl.: G09B 5/00

(54) **Real time learning support system and method**

(71) Applicant: Rigas Tehniska Universitate, 1048 Riga (LV)
(72) Inventor: Kapenieks, Atis, 1048 Riga (LV); Gulbis, Rudolfs, 1048 Riga (LV); Gorbunovs, Aleksandrs, 1048 Riga (LV); Kapenieks jun, Janis, 1048 Riga (LV); Zuga, Bruno, 1048 Riga (LV); Vitolina, Ieva, 1048 Riga (LV); Stale, Ginta, 1048 Riga (LV); Kapenieks sen, Janis, 1048 Riga (LV); Kudina, Ieva, 1048 Riga (LV)
(74) Representative: Anohins, Vladimirs

(57) **Abstract**

A real time learning support system (10) for supporting learning and teaching in online learning environment, the system (10) comprising a learning course delivery server (12), a user terminal (14) being in communication with the course delivery server (12) over a network (16) to provide a course part on the user terminal (14), wherein the system additionally comprises a user activity database (18), a real time user activity analytics module (20), and a communication server (22) for sending motivational messages to the user mobile communication device (24). The analytics module (18) is adapted to estimate a next user activity date from the user activity data stored in the user activity database (16), wherein the system (10) is configured for sending a motivational message through the communication server (22) to a user mobile communication device (24) when no user activity occurred by the estimated next user activity date. The corresponding method is also provided.

## Description

### Technical Field

This invention relates to a real time learning support system and in particular to real time learning support systems for supporting learning and teaching in an online learning environment.

### Background Art

Online learning becomes more and more popular with students, educators and business people.

One of the advantages of the online learning sometimes also called e-learning is that such kind of learning may be organised as a self-regulated type of learning where a learner can choose what and when to learn.

Another advantage is that it could be done in an automated system, without a constant supervision of teachers and couches.

Along with the advantages an e-learning system has some problems. One of the problems, which is crucial to the success of e-learning, is a learner's motivation in the self-regulated and self-paced environment, in the absence of class sessions and tutors attention.

Certainly, the learning process, especially the e-learning process is self-motivational, and taking an e-learning course is a self-rewarding activity. Nevertheless, self-motivation is subject to alternation during the course and additional user motivational support is important, especially in times when self-motivation is decreasing.

Sending motivational messages to the users is one of possible solutions to support user motivation.

For example, a pending patent application EP2112629 Al describes a continuous supporting system for maintaining/boosting motivation. The system is intended for application to various fields including diets, learning/training, sports, etc. The system comprises: a user information recording portion that records attributes of the user; a goal information recording portion that records information on an achievement goal of the user; and an actual accomplishment information recording portion that is associated with the goal information recording portion, records information on actual accomplishment of efforts of the user, and can be updated by the user. When the user has not updated the actual accomplishment for a predetermined period of time, a first message to call attention is sent to the user. As the message is sent in predetermined time after the last update the does not suit well for self-paced learning environment where the inactivity time may differ significantly and depends on many factors.

For sending motivational messages, the timing is all-important. When user self-motivation is high there is no need for additional messages. Moreover, such messages may by annoying and even detrimental to the learning process, whereas sending the motivation message too late is also almost useless, and a more serious intervention is needed to support the user. On the other hand, a simple motivational message sent at the right time can do miracles.

There is a need for a real time learning support system in e-learning environment that could provide its users with additional motivation support at the right time.

### Summary of invention

Accordingly, it is an object of the present invention to provide a system and method for learning support which overcome the deficiencies of the prior art systems.

This and other objectives are achieved by providing a real time learning support system comprising a learning course delivery server, a user terminal being in communication with the course delivery server over a network to provide a course part on the user terminal, wherein the system additionally comprises a user activity database, a real time user activity analytics module, and a communication server for sending motivational messages to the user mobile communication device. The analytics module is adapted to estimate a next user activity date from the user activity data stored in the user activity database, wherein the system is configured for sending a motivational message through the communication server to a user mobile communication device when no user activity occurred by the estimated next user activity date.

In some embodiments the learning support system is adapted to delay sending the motivational message for a predetermined period of time after the estimated next user activity date, and to discard sending the motivational message if a user activity occurred during the predetermined period of time.

In some embodiments the predetermined period of time is calculated as an estimation error for the next user activity date.

In some embodiments the user activity data includes a date stamp of the user logon into the system.

In some embodiments the user activity data may include the user assessment results.

In some embodiments the user activity data may include information about the course part taken by the user.

Advantageously, the communication server for sending the motivational message to the user is a Short Message Service (SMS) server.

Alternatively, the communication server for sending the motivational message to the user may be an Instant Messaging (IM) server, or other short message protocol server.

Preferably, the user mobile communication device is a mobile phone.

In another aspect of the invention a method for real time learning support in a learning support system comprising a learning course delivery server and a user terminal being in communication with the course delivery server over a network, the method comprising the steps:
a) registering user activities in a user activity database;
b) estimating a next user activity date from the user activity data stored in the user activity database;
c) monitoring user activities, and
d) sending a motivational message to the user when no user activity occurs by the estimated next user activity date.

In some embodiments the execution of the step for sending a motivational message may be delayed for a predetermined period of time.

In some embodiments the predetermined period of time may be calculated as an estimation error for the next user activity date.

In some embodiments the estimation for the next user activity date may be corrected on the basis of the other users' activity records stored in the user activity database.

In some embodiments the method may comprise a step of correcting the predetermined period of time based on the other users' activity records.

Advantageously, the next user activity date is estimated by plotting a graph of the previous user activities and extrapolating this graph until the next user activity date. Such a method for the next date estimation may be more precise when the user activities contain some regular patterns.

### Definitions

The term **e-learning** refers to the use of electronic media and information and communication technologies (ICT) in education. E-learning is broadly inclusive of all forms of educational technology in learning and teaching. In the context of this application e-learning is synonymous with internet-based training (IBT), web-based training (WBT), online education, and virtual education. Alternatively, the e-learning may be defined as follows: **e-learning** system is an Internet-based teaching system; e-learning is a distance education through remote resources; e-learning is a new education concept of learning - by using the Internet technology, it deliveries the digital content and provides a learner-orient environment for the teachers and students.

**SMS -** Short Message Service is a text messaging service component of phone, web, or mobile communication systems, using standardized communications protocols that allow the exchange of short text messages between fixed line or mobile phone devices.

It is supposed that main users of the system are students or learners, and the term user in the context of this application designate students or learners if the other is not explicitly stated.

### Brief description of drawings

Fig. 1 is a block diagram of an example system illustrating aspects of the invention.
Fig. 2 is a block diagram of another example system.
Fig. 3 is a method diagram.

### Description of embodiments

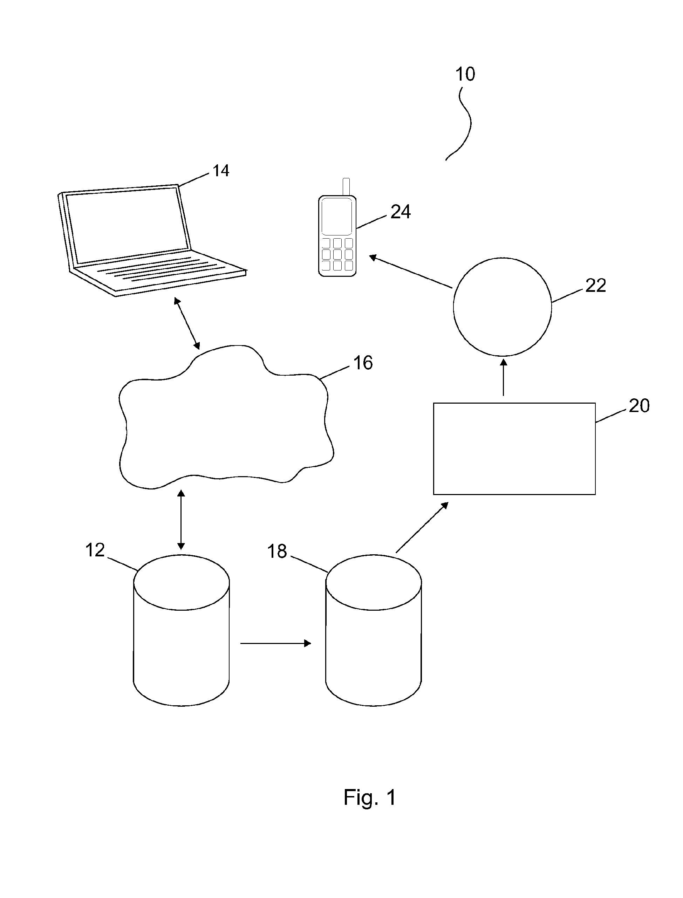

The present invention will be described using the following exemplary embodiments. Fig. 1 is an illustrative diagram showing an overall usage image of a real time learning support system according to the present invention. The system 10 shown in Fig. 1 comprises a learning course delivery server 12 which is adapted to provide learning course to the learning system main users - students. The implementation of the course delivery server is outside the present discussion. Such servers or e-learning systems are known in the art and the presented learning support system may be used with any of them. For example, the Moodle courseware or a Course Management System (CMS), also known as a Learning Management System (LMS) or a Virtual Learning Environment (VLE). It is a free web application that educators can use to create effective online learning sites. The system 10 further comprises a user terminal 14 able to communicate with the course delivery server 12 to provide its user with a portion of the learning course. As the user terminal may be used any computer workstation or mobile computer device such as a laptop, notebook, Personal Digital Assistant (PDA), smart phone, etc. Practically any computer able to provide communication with the server 12 and to display data may be used as a user terminal 14. The user terminal 14 communicates with the course delivery server 12 over a network 16, which may be the internet, WAN, LAN or any other suitable network.

The system 10 is additionally provided with a user activities database 18 which is a module that monitors user activities, and as an activity takes place, records and stores the information about that activity in the database 18.

A user activity may be anything the user is doing when working in the system; in particular it could be user logon into the system, selection of a course part, time between mouse clicks, assessment test results, etc.

The system 10 further comprises an analytics module 20 connected with user activities database 18 which is processing the user activities data to monitor user learning progress and take pre-programmed action to support user motivation when learning progress data shows that user need additional support.

When a user activity takes place it is registered or recorded in the database 18 and information about the activity is processed in the real time analytics module 20. The analytics module 20 estimates or predicts the next user action. In particular, the module 20 estimates the next user activity date, i.e., the date of the next learning session.

The next activity date is estimated by analysing historical records of the previous activity dates, and may be accomplished by known methods of predicting future action on the basis of historical records. The simplest way is to calculate average of intervals between recorded activity dates and add this interval to the last activity date. All historical records may be taking into account when calculating the prediction.

System initially uses algorithms designed from teachers experience. However, any other method known in the art may be used in the calculation, for example, a running average may be calculated when only most recent records are taken into account. Collected learner behaviour data learning outcomes data may be used in improving and updating the data analysis algorithm.

More complicated prediction methods may be used. For example, the module 20 may plot a graph of past user activities on the time axis and extrapolate this graph into the future in order to estimate the next user activity date.

The analytics module 20 may also calculate a confidence interval for the estimated date. That confidence interval may be taken into account in making a decision on when to send the motivational message to the user or undertake other intervention into the learning process to support the user.

A person skilled in the art will appreciate that to make the estimation or prediction, more accurate additional parameters of the user activities may be taken into account. For example, a duration of the learning session, whether this learning session comprises new material or assessment test, the test results, is the user in the beginning of the course or closed to the end, etc.

The analytics module 20 also monitors user activities and compare the real activity with its estimation. If the real activity takes place before the estimated date for the next activity, the estimation is recalculated. Whereas if the real activity has not occurred by the estimation date, the module executes a pre-programmed intervention action, in particular, the module 20 sends a motivational message to the user. The motivational message is sent through the Short Message Service (SMS) server 22 on the user mobile communication device or mobile phone 24.

The system my be configured to select the motivational message depending on additional information that may be obtained from the user activity data, for example, the system may make some assumption about the problem that difficulties in learning by comparing user activity data with course learning trajectory.

It is important that motivational messages are being sent through an external messaging system as for example, Short Message Server (SMS).

The motivational message may be sent by any messaging system, preferably by instant messaging system, which can reach the learner in required time. Advantageously the motivational message is sent to the learner phone, preferably by SMS or any other available instant messaging service. Almost everyone is nowadays carrying mobile phone all the day around; therefore there is a good possibility that the message will reach the learner.

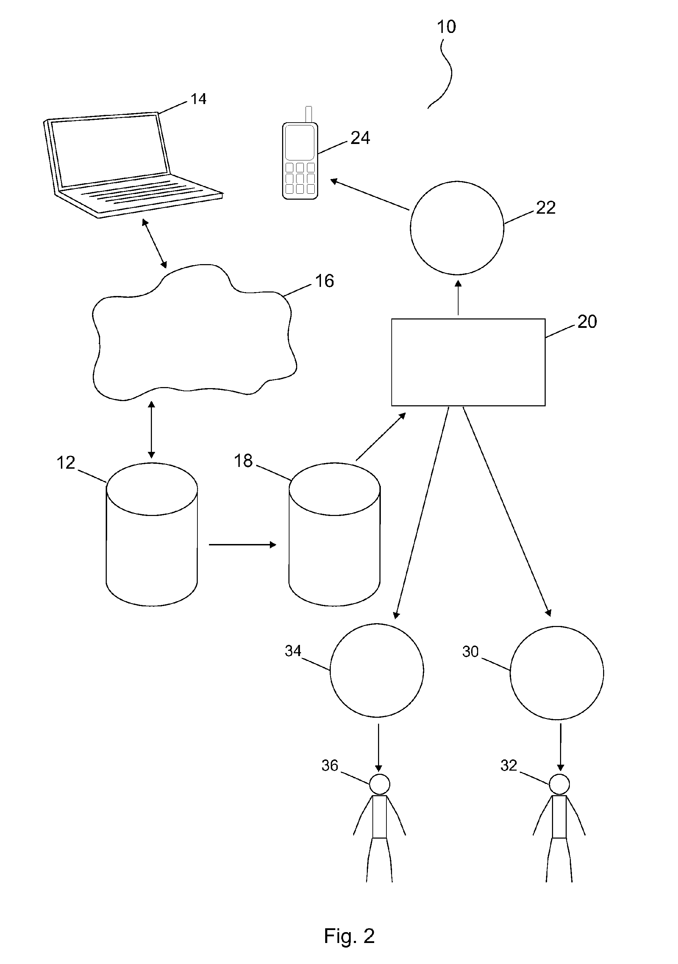

The proposed real time learning support system may provide additional learning support functions as well. Fig. 2 shows a block diagram of an embodiment that in addition to sending motivational message to the user also alerts the learning supervisor or tutor that this user may need special attention. The teacher informing function may be fulfilled by the same analytics module 18. Alternatively, the system 10 may include a separate module for alerting and informing teachers about user learning progress. In this embodiment the analytics module 18 prepares information for the teacher and sends it through a teacher messaging server 30.

Further, the analytics module 18 may be adapted, or an additional specialised module may be included in the system 10, for collecting information for learning course developers. For example the system may provide information about which parts of the course caused more difficulties for students to accomplish, or which part serves as stumbling blocks for the students. In this embodiment the user activities data are consolidated in the user analytics module 18 and through a reporting server 34 sent to the course developers. These data may be taken into account in course updating or in designing new courses.

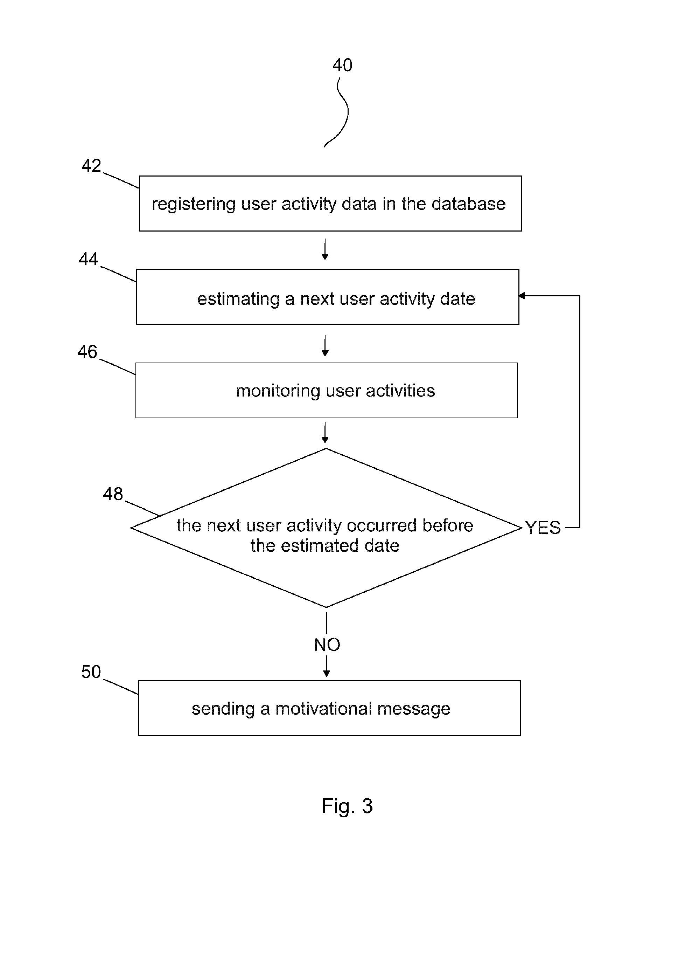

Fig. 3 is a schematic flow-chart of a method for real time learning support in accordance with some exemplary embodiments. Operations of the method may be used, for example, by system 10 of Fig. 1 and/or by other suitable units, devices and/or systems.

In some embodiments, the method 40 may include, for example, registering user activity data in the database (block 42), estimating a next user activity date (block 44), monitoring user activities (block 46) and if the next user activity has not occurred by the estimated date (block 48), sending a motivational message to the user (block 50). Preferably, the motivational messages are being sent through an external messaging system as for example, Short Message Server (SMS).

In some embodiments, the method may include additional steps, for example, the method may include delaying the motivational message sending to the user for a predetermined period of time, calculating the predetermined period of time from the past user activities data.

We would like to note that as the online learning process is self-motivating, most of the time there is no need in additional motivation during the course. However it is important to monitor the process and provide additional motivation in time when the learner self-motivation by any reason decreased and the proposed real time learning support system and method are capable, by monitoring user activities during the course, to estimate when some additional motivation may be needed and to provide it.

While specific embodiments of the invention have been described in detail, it should be appreciated by those skilled in the art that various modifications and alternations and applications could be developed in light of the overall teachings of the disclosure. Accordingly, the particular arrangements, systems, apparatuses, and methods disclosed are meant to be illustrative only and not limiting as to the scope of the invention.

### Reference signs list

10. a learning support system
12. a learning course delivery server
14. a user terminal
16. a network
18. a user activity database
20. a real time user activities analytics module
22. a communication server
24. a user mobile communication device
30. a teacher messaging server
32. a teacher
34. a reporting server for developers
36. a developer

### Citation list

EP 2112629 A (KEY PLANNING, CO., LTD.) 28.10.2009

## Claims

1. A real time learning support system (10) comprising:
a) a course delivery server (12),
b) a user terminal (14) being in communication with the course delivery server (12) over a network (16) to provide a course part on the user terminal (14)
c) a user activity database (18), connected to the course delivery server (12) for gathering and storing user activity data, wherein
the system (10) further comprises a real time user analytics module (20) connected to the user activity database (18), and a communication server (22), wherein
the analytics module (18) is adapted to estimate a next user activity date from the user activity data stored in the user activity database (16), wherein
the system is configured for sending a motivational message through the communication server (22) to a user mobile communication device (24) when no user activity occurred by the estimated next user activity date.

2. The system (10) according to claim 1 wherein the system (10) is adapted to delay sending the motivational message for a predetermined period of time after the estimated next user activity date, and to discard sending the motivational message if a user activity occurred during the predetermined period of time.

3. The system (10) according to claim 2 wherein the predetermined period of time is calculated as an estimation error for the next user activity date.

4. The system (10) according to claim 1 wherein the communication server (24) is a Short Message Service (SMS) server.

5. The system (10) according to claim 1 wherein the communication server (24) is an Instant Messaging (IM) server.

6. The system (10) according to claim 1 wherein the user mobile communication device (22) is a mobile phone.

7. The system (10) according to claim 1 wherein the user activity data includes datestamp of the user logon into the system (10).

8. The system (10) according to claim 1 wherein the user activity data includes the user assessment results.

9. The system (10) according to claim 1 wherein the user activity data includes information about the course part taken by the user.

10. A method for real time learning support in a learning support system (10) comprising a learning course delivery server (12), a user terminal (14) being in communication with the course delivery server (12) over a network (16), the method comprising the steps:
a) registering user activities in a user activity database (18);
b) estimating a next user activity date from the user activity data stored in the user activity database (18);
c) monitoring user activities, and
d) sending a motivational message to the user when no user activity occurs by the estimated next user activity date.

11. The method according to claim 10 delaying execution of the step (d) for a predetermined period of time.

12. The method according to claim 11 further comprising a step (f) of calculating the predetermined period of time as an estimation error for the next user activity date.

13. The method according to any of claims 10 or 11 further comprising a step (g) of correcting the next user activity date based on the other users' activity records.

14. The method according to claim 13 further comprising a step (h) of correcting the predetermined period of time based on the other users' activity records.

15. The method according to claim 10 wherein the next user activity date is estimated by plotting a graph of previous user activities and extrapolating this graph until the next user activity date.
